(19)

Europäisches
Patentamt
European
Patent Office
Office européen
des brevets

(11) **EP 2 189 334 A1**

(12) **EUROPEAN PATENT APPLICATION**
published in accordance with Art. 153(4) EPC

(43) Date of publication:
**26.05.2010 Bulletin 2010/21**

(21) Application number: **07828274.6**

(22) Date of filing: **20.09.2007**

(51) Int Cl.:
**B60R 13/08** *(2006.01)*     **B32B 3/12** *(2006.01)*
**B32B 5/18** *(2006.01)*     **G10K 11/162** *(2006.01)*
**G10K 11/172** *(2006.01)*

(86) International application number:
**PCT/JP2007/068239**

(87) International publication number:
**WO 2009/037765 (26.03.2009 Gazette 2009/13)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Nagoya Oil Chemical Co., Ltd.
Tokai-shi, Aichi 476-0001 (JP)**

(72) Inventors:
• **OGAWA, Masanori
Tokai-shi
Aichi 476-0001 (JP)**
• **FUJII, Makoto
Tokai-shi
Aichi 476-0001 (JP)**

(74) Representative: **Vossius & Partner
Siebertstraße 4
81675 München (DE)**

(54) **BUFFERING AND SOUND-ABSORBING MEMBER**

(57)     The object of the present invention is to provide a shock and sound absorbing member having excellent shock and sound absorbing properties for use of a car etc. The shock and sound absorbing member comprises a core panel 2 onto which a plural number of tubular cells 22 are formed lengthwise and widthwise, a base panel 3 being attached to one side of the core panel 2, and a porous sheet 4 covering the other side of the core panel 2, the invading sound waves being damped in the tubular cells 22 of the core panel 2, and then absorbed by the porous sheet 4, the ventilation resistance of the porous sheet 4 being set to be in the range of between 0.5 and 5.0 kPa ·s/m.

Figure 1

**Description**

FIELD OF THE INVENTION

The present invention relates to a shock and sound absorbing member to be arranged on such as the underside or upperside of a car engine, floor, or the like.

BACKGROUND OF THE INVENTION

A shock and sound absorbing member, for instance, is arranged on the underside of a car engine or compartment floor to protect said engine or floor from small stones which are scattered during the driving of the car, or to help prevent in-use exterior noises or the like from invading the car compartment. Further, depending on the car model, there is a case where said shock and sound absorbing member is arranged on the upperside of the engine (underneath of the engine hood).

Hitherto, as said shock and sound absorbing member, a structure consisting of a base material and a sound absorbing member made of a porous sheet, a structure consisting of a sound absorbing member made of a porous sheet and a surface material, or the like have been provided.

Patent Literature 1: Tokkai 2002-086490
Patent Literature 2: Tokkai H11-254570

DISCLOSURE OF THE INVENTION

PROBLEMS TO BE SOLVED BY THE INVENTION

Said traditional shock and sound absorbing member performs its shock and sound absorbing action with said air containing porous sheet, but the effect of this shock and sound absorbing performance using said porous sheet alone may be insufficient for use in a car.

MEANS TO SOLVE SAID PROBLEMS

The object of the present invention is to provide a shock and sound absorbing member having sufficient performance so as to be a shock and sound absorbing member for a car, said shock and sound absorbing member 1 comprising a core panel 2 onto which a plural number of tubular cells are formed lengthwise and widthwise, a base panel 3 being attached to one side of said core panel 2, and a porous sheet 4 covering the other side of said core panel 2, wherein said core panel 2 is made of a thermoplastic resin, the ventilation resistance of said porous sheet being set to be in the range of between 0.5 and 5.0 kPa·s/m. Generally, said thermoplastic resin core panel 2 is manufactured by the vacuum and/or pressure forming of a thermoplastic resin sheet 21. It is preferable that said thermoplastic resin sheet be drawn widthwise to a prescribed degree before said thermoplastic resin sheet 21 is molded by vacuum and/or pressure forming.

EFFECT OF THE INVENTION

[ACTION]

Said shock and sound absorbing member 1 performs its shock and sound absorbing action by said porous sheet having a ventilation resistance in the range of between 0.5 and 5.0 kPa·s/m, and further, performs its sound insulation action by damping sound's energy, this being done by reflecting the sound waves invading said tubular cells 22 of said core panel 2 onto the inner walls of said tubular cells 22.

Said core panel 2, being made of said thermoplastic resin, is preferably manufactured by vacuum and/or pressure forming, which is suitable for mass production, and by which an article having a complex shape can be molded.

When said thermoplastic resin sheet 2 is molded by vacuum and/or pressure forming, in a case where said thermoplastic resin sheet 21 is stretched widthwise to a prescribed degree before vacuum and/or pressure forming, said thermoplastic resin sheet 21 may easily become elongated, as a result said thermoplastic resin sheet 21 may elongate nearly uniformly conforming to the mold, so that said thermoplastic resin sheet 21 can be uniformly molded in the mold. In particular, in a case where a thermoplastic resin having a high softening point such as engineering plastic is used as the material for said core panel, said method wherein said thermoplastic resin sheet 21 is drawn widthwise is effective. Further, especially in a case where a thermoplastic resin which is apt to cause a draw down phenomenon is used as a material, said draw down phenomenon can easily be relieved by the drawing widthwise of said thermoplastic resin sheet, and said thermoplastic resin sheet can be uniformly molded in the mold.

[EFFECT OF THE INVENTION]

According to the present invention, a shock and sound absorbing member which has excellent shock and sound absorbing performance, and is easily manufactured, is provided.

BRIEF DESCRIPTION OF THE DRAWINGS

Fig.1 is a cross sectional view of a shock and sound absorbing member.
Fig.2 is a perspective view of a core panel onto which a plural number of bottomless tubular rectangular cells are formed lengthwise and widthwise.
Fig.3 is a sectional view cutting along line B-B of said core panel onto which a plural number of bottomless tubular rectangular cells are formed lengthwise and widthwise.
Fig.4 is a perspective view of a core panel onto which a plural number of bottomed tubular rectangular cells are formed lengthwise and widthwise.
Fig.5 is a cross sectional view of a core panel onto which a plural number of bottomed tubular rectangular cells are formed lengthwise and widthwise.
Fig.6 is a cross sectional view of a shock and sound absorbing member from another embodiment.
Fig.7 is an explanation view of the measurement theory of ventilation resistance.
Fig.8 shows graphs illustrating the results of the performance tests of the shock and sound absorbing member in EXAMPLES and COMPARISONS.

EXPLANATION OF CODES

1. Shock and sound absorbing member
2. Core panel
3. Base panel
4. Porous sheet

BEST MODE FOR CARRYING OUT THE INVENTION

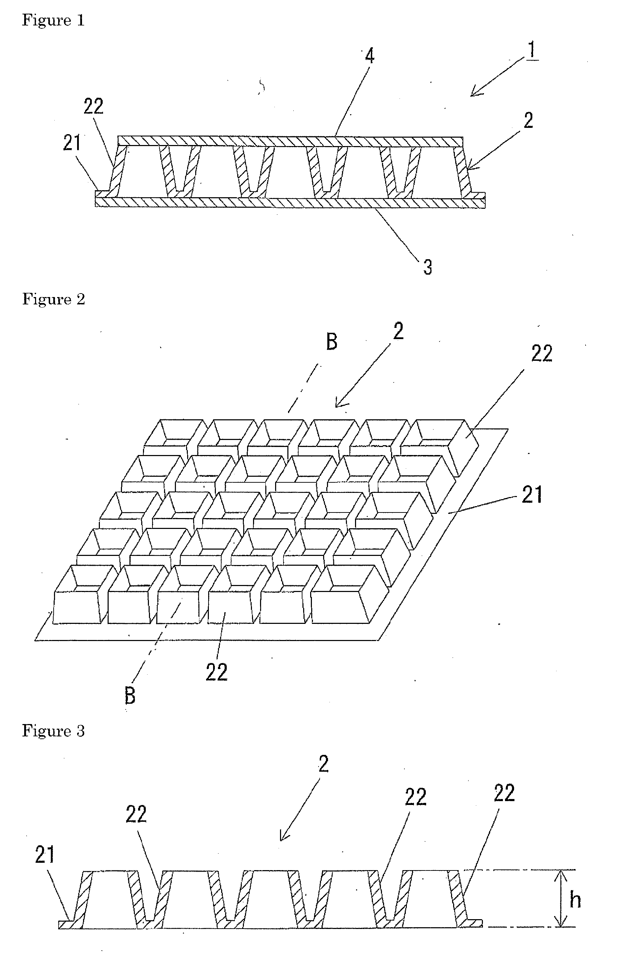

The present invention is described in details below.
Said shock and sound absorbing member 1 of the present invention comprises, for instance, a core panel 2, a base panel 3 attached to one side of said core panel 2, and a porous sheet 4 covering the other side of said core panel 2 as shown in Fig.1.

[Core panel]

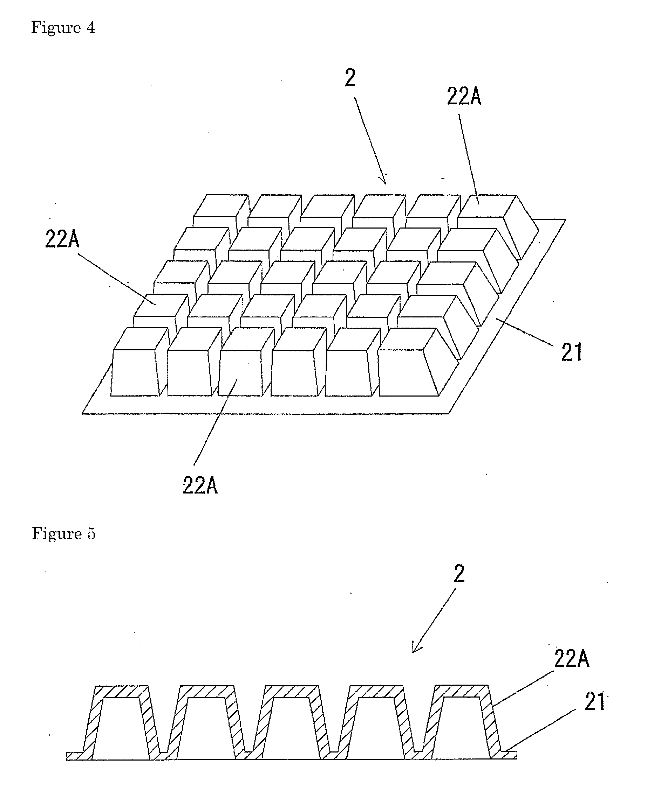

For instance, said core panel 2 of the present invention has a structure in which a plural numbers of tubular cells 22 are formed lengthwise and widthwise on a panel 21 as shown Figs.2, and 3. To manufacture said core panel 2, a thermoplastic resin sheet 21 is molded by vacuum and/or pressure forming to form a plural number of bottomed tubular rectangular cells on said thermoplastic resin sheet 21 as shown in Figs.4 and 5, and if desired, the bottoms of said bottomed tubular rectangular cells can be removed by cutting to form bottomless tubular rectangular cells as shown in Figs.2 and 3.
The material used in said core panel is a thermoplastic resin such as polystyrene (PS), acrylonitrile-styrene copolymer (AS), acrylonitrile-butadiene-styrene copolymer (ABS), acrylonitrile-ethylene-styrene copolymer (AES), polyethylene (PE), polypropylene (PP), polymethyl methacrylate (PMMA), ethylene-propylene copolymer (EPR), polyvinyl chloride (PVC), polyvinylidene chloride, ethylene-vinyl acetate copolymer, modified polypropylene that is PP modified to PE and/or EPR (modified PP), or the like, or a polymer alloy or a polymer blend containing two or more kinds of said thermoplastic resin, and further, said material is a thermoplastic type engineering plastic such as polyamide (PA), polyester, polyacetal (POM), polycarbonate (PC), polyethylene telephthalate (PET), polybutylene telephthalate (PBT), polysulfone (PSF), polyether sulfone (PES), polyphenylene ether (PPE), polyphenylene sulfide (PPS), polyarylate (PAR), polyether ether ketone (PEEK), polyamide imide (PAI), polyimide (PI), polyether imide (PEI), polyaminobismaleimide, methylpentene copolymer (TPX), cellulose acetate (CA), or the like, or a liquid crystal type engineering plastic such as polyallylether, or the like, or a compression molding type engineering plastic such as polytetrafluoroethylene (PTFE), or the like, or other engineering plastic such as amorphous polymer, polyaminobismaleimide, and bismaleimide-triazine group thermosetteing type aromatic polyimide, or the like, or a polymer alloy or a polymer blend containing two or more kinds of said engineering plastic, or a polymer alloy containing one or more kind(s) of said engineering plastic, and one or more kind(s) of thermoplastic resin such as polystyrene (PS), polypropylene (PP), or modified PP, or a polymer alloy wherein one or more kind(s) of thermoplastic elastomer and/or synthetic rubber is (are) further added to said polymer alloy.

Said thermoplastic elastomer and/or synthetic rubber is/are, for instance, a block copolymer such as a styrenic thermoplastic elastomer, butadiene-styrene block copolymer styrene-rubber intermediating block-styrene copolymer or the like, and said thermoplastic elastomer and/or synthetic rubber is/are such as polyester, polyester acrylate, acryl rubber (AR), butyl rubber, silicone rubber, urethane rubber (UR), fluoride rubber, polysulfide rubber, graft rubber, butadiene rubber (BR), polybutadiene, isoprene rubber (IR), polyisoprene, chloroprene rubber (CR), polyisobutylene rubber (IBR), polybutene rubber, thiokol rubber, polysulfide rubber, polyether rubber, epichlorohydrin rubber, norbornene terpolymer, polybutadiene chain-end modified to hydroxy or carboxyl group, partial hydrogenation styrene-butadiene block copolymer, chlorosulfide rubber, isobutene-isoprene rubber (IIR), acrylate-butadiene rubber (ABR), styrene-butadiene rubber (SBR), acrylonitrile-butadiene rubber (NBR), pyridine-butadiene rubber, styrene-isoprene rubber (SIR), styrene-ethylene copolymer, polystyrene-polybutadiene-polystyrene (SBS), polystyrene-polyisoprene-polystyrene (SIS), poly($\alpha$-methyl-styrene)-polybutadiene-poly($\alpha$-methylstyrene) ($\alpha$-MeSB$\alpha$-MeS), poly($\alpha$-methylstyrene)-polyisoprene-poly($\alpha$-methylstyrene), ethylene-propylene copolymer (EP), butadiene-styrene copolymer (EP), ethylene-propylene-ethylidene copolymer, ethylene-propylene-diene copolymer, ethylene-propylene copolymer rubber, ethylene-1-butene copolymer rubber, ethylene-propylene-ethylidenenorbornene copolymer rubber, ethylene-propylene-dicyclopentadiene copolymer rubber, ethylene-propylene-1,4-hexadiene copolymer rubber, ethylene-1-butene-ethylidenenorbornene copolymer rubber, ethylene-1-butene-dicyclopentadiene copolymer rubber, ethylene-1-butene-1,4-hexadiene copolymer rubber, acrylonitrile-chloroprene rubber (NCR), styrene-chloroprene rubber (SCR), styrene-butadiene-styrene (SBS) copolymer, styrene-isoprene-styrene (SIS) copolymer, styrene-hydrogenation polyolefin-styrene (SEBS) copolymer, or the like. Still further, a biodegradable polymer made of such as a polylactic acid, cornstarch, sugar cane starch or the like may be added to said polymer alloy. The preferable material for said thermoplastic resin is a polymer alloy of said engineering plastic or modified PP.

Polyethylene (PE) is usable to modify PP, and any kind of PE such as a high density PE, the density of which is higher than 0.941, a medium density PE, the density of which is in the range of between 0.926 and 0.940, a low density PE, the density of which is in the range of between 0.910 and 0.925, and an ultra low density PE, the density of which is lower than 0.909 are usable to modify PP, said low density PE being preferable since said low density PE has a good compatibility with PP, and greatly improves the elongation of modified PP.

Further, ethylene-propylene rubber (EPR) is usable to modify PP, and any EPR such as ethylene-propylene rubber-like copolymer, ethylene-propylene-diene terpolymer (EPDM) into which (a) diene component(s) such as cyclopentadiene, ethylidenenorobornene, 1.4-hexadiene, or the like is(are) copolymerized, is(are) usable to modify PP.

As described above, the preferable thermoplastic resin to be used as a material for said core panel is modified PP, and into said modified PP, PE and/or EPR is(are) compounded in the range of between 5 and 30% by mass. In a case where PE and /or EPR is (are) compounded into said PP at below 5% by mass, improvement in the elongation property of said PP will be insufficient, and good moldability can not be guaranteed.

Further, in a case where PE and/or EPR is (are) compounded into said PP at over 30% by mass, the hardness of the resulting-modified PP may be insufficient, degrading said modified PP's shape and dimensional stability, and heat resistance.

If necessary, one or more kind(s) of thermoplastic resin may be mixed into said modified PP. Said thermoplastic resin is such as a polyvinyl chloride group resin, acrylic resin, metharylic resin, polyvinylidene chloride group resin, polyvinyl propionate group resin, polyester group resin, or the like.

Commonly said modified PP is provided as a sheet, and a thermoplastic film or a foamed thermoplastic resin sheet may be formed on one side or both sides of said modified PP sheet. Said thermoplastic resin sheet may be a sheet of a thermoplastic resin, for instance, polyolefin such as PE, unmodified PP, EPR, ethylene-vinyl acetate copolymer, or the like, a polyvinyl chloride group resin, acrylic resin, methacrylic resin, polyvinylidene chloride group resin, polystyrene group resin, polyvinyl propionate group resin, styrene-butadiene copolymer, polyester group resin, or the like. From the view point of interlaminar strength, or heat resistance, unmodified PP film is preferable. Said film on said modified PP sheet improves the surface flatness and chemical resistance of said core panel 2, especially in a case where an inorganic filler is mixed into said modified PP.

One or more kind(s) of inorganic filler may be mixed into said thermoplastic resin as the material for said core panel, to improve the mechanical strength and the heat resistance of said core panel. Said inorganic filler may be such as a calcium carbonate, magnesium carbonate, barium sulphate, calcium sulphate, calcium sulphite, calcium phosphate, calcium hydroxide, magnesium hydroxide, aluminium hydroxide, magnesium oxide, titanium oxide, iron oxide, zinc oxide, alumina, silica, diatomaceous earth, dolomite, gypsum, talc, clay, asbestos, mica, calcium silicate, bentonite, white carbon, carbon black, iron powder, aluminium powder, glass powder, stone powder, blast furnace slag, fly ash, cement, zirconia powder, or the like.

Further, one or more kind(s) of organic filler or fibrous filler may be mixed into said thermoplastic resin as material(s) for said core panel to improve its shape and dimensional stability, compression and tensile strength, or the like. Said organic filler is such as linter, linen, sisal, wood flour, coconut shell flour, walnut powder, starch, wheat flour, or the like, and said fibrous filler is a natural fiber such as cotton, hemp, bamboo fiber, palm fiber, wool, asbestos, kenaf fiber, or the like, a synthetic resin fiber such as a polyamide fiber, polyester fiber, polyolefin fiber, acrylic fiber, polyvinyl chloride fiber, polyvinylidene chloride fiber, or the like, a semi-synthetic resin fiber such as viscose fiber, acetate fiber, or the like, inorganic fiber such as asbestos fiber, glass fiber, carbon fiber, ceramic fiber, metal fiber, whisker, or the like. Generally said organic or inorganic filler or said fibrous filler is added to said thermoplastic resin in an amount in the range of between 0.05 and 200% by mass.

Said thermoplastic resin may be colored with pigment or dye stuff to distinguish it, and further plasticizers such as dioctyl phthalate(DOP), dibutyl phthalate(DBP), or the like, antioxidants, antistatic agents, crystallizers, fire retardants, flameproof agents, insecticides, preservatives, wax, lubricants, stabilizer, antioxidants, ultraviolet absorbers, foaming agents such as chemical foaming agent, capsule type foaming agent, or the like may be added to said thermoplastic resin. One or more kind(s) of said component may be added to said thermoplastic resin.

Generally, the thickness of said thermoplastic resin sheet 21 is set to be in the range of between 0.1 and 1.0mm, preferably, 0.3 and 0.5mm, and in a case where said thermoplastic resin is said modified PP, the thickness of said film formed on said sheet 21 is generally set to be in the range of between 10 and 100$\mu$m. Further, said thermoplastic resin sheet may be a foamed thermoplastic resin sheet.

To manufacture said core panel 2 of the present invention, said thermoplastic resin sheet 21 is heated to soften and then introduced into a vacuum and/or pressure forming machine so as to mold it by said vacuum and/or pressure forming. Said thermoplastic resin sheet 21, heated and softened, is preferably drawn widthwise (cross direction to the introduction direction of said thermoplastic resin sheet 21 into said vacuum and/or pressure forming machine) to a prescribed degree before said thermoplastic resin sheet 21 is introduced into the vacuum and/or pressure forming machine, namely before molding.

In a case where said thermoplastic resin sheet 21 is introduced into said vacuum and/or pressure forming machine without stretching, uniform elongation of said thermoplastic resin sheet 21 during molding can not be realized, and it is feared that a molded article having a uniform thickness can not be manufactured because, for instance, the thickness of the deep drawing part(s) of said molded article becomes thin, while the thickness of other part(s) increases.

On the contrary, in a case where said thermoplastic resin sheet 21, having been heated and softened, is stretched beforehand, said thermoplastic resin sheet 21 may elongate more easily, that is to say, said thermoplastic resin sheet 21 may be put in such a condition that said thermoplastic resin sheet 21 can easily be elongated, so that the stress of elongation propagates uniformly to the entire area of said thermoplastic sheet 21 in said vacuum and/or pressure forming machine. Accordingly, the resulting molded article (in this case core panel 2) has highly uniform thickness as a whole, and in a case where said thermoplastic resin sheet 2, which has been stretched widthwise, is deep drawn, the deep drawn part(s) of said thermoplastic sheet 2 becomes difficult to thin out, causing the problem of tearing, and the like, so that said core panel having a plural number of tubular cells 22A shown in Fig.4 is easily molded.

The degree of stretching widthwise said thermoplastic resin sheet 21 is preferably set to be in the range of between 1% and 5% of the original width of said thermoplastic resin sheet 21. In a case where the degree of stretching is below 1% of the original width, said thermoplastic resin sheet will be harder to elongate, and the drawing down phenomenon of said thermoplastic sheet 21 when said thermoplastic sheet 21 is heated to mold, can not be completely dissolved.

In a case where the degree of stretching is beyond 15% of the original width, the thickness of said thermoplastic resin sheet 21 will be reduced before molding, and there is a possibility that said thermoplastic resin sheet may tear during the molding process.

To manufacture said core panel of the present invention, other molding methods besides said vacuum and/or pressure forming such as press molding, injection molding, or the like can be applied.

The thickness of said core panel 2 is preferably set to be in the range of between 5 and 100mm. The thickness of said core panel 2 corresponds to the height of said tubular cells 22 (in Fig.3, the height of said tubular cells 22 is shown as "$h$"), and said tubular cells 22 having a height of around $h$ can attenuate sound waves preferably by reflecting the sound waves invading said tubular cells 2 onto the inner walls of said tubular cells.

In a case where the height $h$ of said tubular cells 22 is below 5mm, it is feared that the sound waves invading said tubular cells 22 will travel through said tubular cells 22 without reflecting on the inner walls of said tubular cells 22.

On the contrary, in a case where the height $h$ of said tubular cells 22 is beyond 100mm, the thickness of the resulting shock and sound absorbing member 1 will increase, and according to the increase in the thickness of said shock and sound absorbing member 1, the volume of said shock and sound absorbing member 1 has increased, hence also increasing the amount of space in the car to fit said shock and sound absorbing member 1.

In the embodiment shown in Fig. 1 the bottom of said bottomed tubular cell 22 is cut out to form a bottomless tubular cell, however in the present invention, said base panel 3 may be attached to the bottom side of said bottomed tubular cell without cutting out its bottom, and said porous sheet 4 may cover the opposite side of said core panel 4. In this embodiment, the tubular rectangular cells 22, 22A are formed on said core panels 21, but instead of said tubular rectangular cells 22, 22A, any shape of tubular cell such as cylindrical tubular cell, or hexagonal tubular cell may be formed on said core panel.

[BASE PANEL]

Said base panel 3 used in the present invention includes a panel or a molded article made of a rigid plastic such as PS, AS, ABS, AES, PP, modified PP, PVC, PC, PMMA, PSF, PES, PPO, PPS, PAR, PEEK, PAI, PI, PEI, melamine resin, phenol resin, or the like, or a foamed panel made of said rigid plastic, or a woody panel such as wooden board, plywood, hard board, particle board, medium-density fiberboard (MDF), or the like, or a metal panel made of a metal such as aluminium, iron, steel, titanium, or the like, or a alloy such as duralumin, stainless steel, or the like, or a molded porous sheet used in the present invention. Said base panel 3 invests the shock and sound absorbing member of the present invention with sound absorbing and insulating properties, and rigidity.

[Porous sheet]

A porous sheet 4 covers one side of said core panel 2 of the present invention as shown in Fig.1. The material of said porous sheet 4 is a fiber aggregate such as a knit or woven fiber sheet, nonwoven fabric, felt, or a laminated sheet of said fiber sheet, or the like, and the fiber used in said fiber aggregate is, for instance, a synthetic fiber such as polyester fiber, polyethylene fiber, polyamide fiber, acrylic fiber, polyurethane fiber, polyvinyl chloride fiber, polyvinylidene chloride fiber, acetate fiber, or the like, a natural fiber such as pulp, cotton, palm fiber, hemp fiber, bamboo fiber, kenaf fiber, or the like, an inorganic fiber such as glass fiber, carbon fiber, ceramic fiber, asbestos fiber, or the like, a reclaimed fiber obtained by the defibrating of the scraps of the fiber product made of said fiber, or the like, said fiber being used singly or two or more kinds of fiber may be used in said fiber aggregate. Further, as the material of said porous sheet, a well known foamed plastic having an interconnecting structure, a sintering plastic beads, or the like is used. Said foamed plastic having an interconnecting structure is such as polyurethane foam (include flexible polyurethane foam, hard polyurethane foam), foamed polyolefin such as polyethylene foam, polypropylene foam, or the like, polyvinyl chloride foam, polystyrene foam, foamed amino plastic resin such as foamed melamine resin, foamed urea formaldehyde resin, or the like, a foamed epoxy resin, a foamed phenol group resin comprising phenolic compounds such as monohydric phenol, polyhydric phenol or the like.

The ventilation resistance of said porous sheet 4 is set to be in the range of between 0.5 and 5.0 kPa·s/m. Said porous sheet 4 having a ventilation resistance in the range described above gives the shock and sound absorbing member of the present invention good shock and sound absorbing properties.

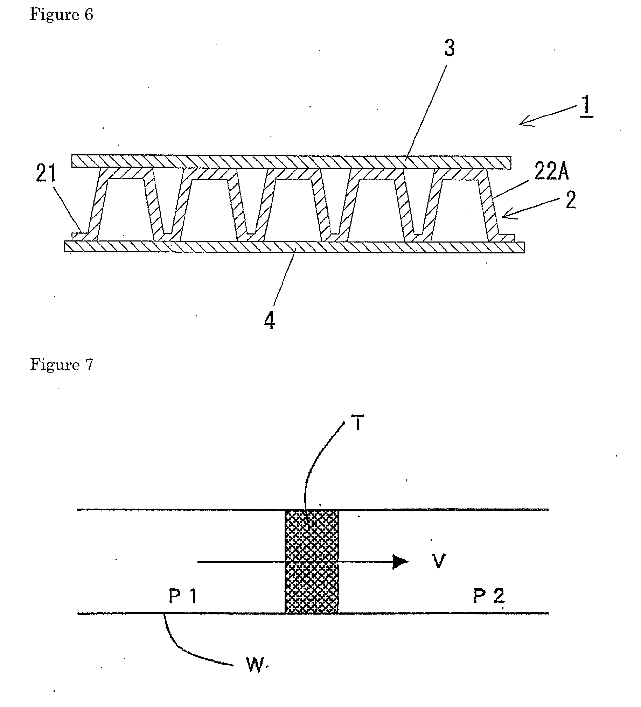

Said ventilation resistance R (kPa ·s/m) is a barometer expressing the degree of air travelling through the material. To measure said ventilation resistance R, a steady flow pressure-differential measuring method may be applied. As shown in FIG.7, a test piece T is arranged in a cylindrical duct W, and while air travels through said duct at a constant flow, as shown by an arrow, the difference in pressure in said duct between inlet side P1, and outlet side P2 is measured. The ventilation resistance is calculated using the following formula.

$$R=\Delta P/V$$

Herein $\Delta P$ represents the difference in pressure Pa($\Delta P=P1 \cdot P2$), and V represents the volume of air flow for said unit cross section area of said duct ($m^3/m^2 \cdot S$). Said ventilation resistance R (Pa ·s/m) has the following relationship with the ventilation degree C (m/Pa ·s) of C=1/R.

Said ventilation resistance can be measured with such as the ventilation tester (Tester Name: KES-F8-AP1, KATO TECH CO., LTD. The steady flow pressure-differential measuring method).

Synthetic resin may be impregnated into said porous sheet 4 in so far as the ventilation property of said porous sheet is retained. Said synthetic resin may include, for instance, a precondensate of a thermosetting resin such as melamine group resin, urea group resin, phenol group resin, or the like and thermoplastic resin or said synthetic resin is provided as an emulsion, water solution, or the like.

Further, in a case where fire resisting or nonflammable fiber, for instance, an inorganic fiber such as carbon fiber, glass fiber, ceramic fiber, or the like, a mineral fiber such as asbestos fiber, or the like, an aramid fiber (aromatic polyamide fiber), an animal hair such as sheep wool (natural wool) or the like is used as the material for said porous sheet, said shock and sound absorbing member 1 can acquire fire resistance or nonflamability without using a flame retardant agent. Flame retardant agents are described below.

[Flame retardant agents]

Further, a flame retardant may be added to said porous sheet 4. Said flame retardant is, for instance, such as flame retardant containing phosphorus, flame retardant containing nitrogen, flame retardant containing sulfur, flame retardant containing boron, flame retardant containing bromine, guanidine group flame retardant, phosphate group flame retardant, phosphoric ester flame retardant, amine resin group flame retardant, or the like.
A powdery flame retardant, which is insoluble or difficult to dissolve in water, is especially advantageous when used in the present invention.
Said powdery flame retardant, which is insoluble or difficult to dissolve in water, imparts a flame retardancy having excellent water resistance and durability to said porous sheet 4. In particular, since said porous sheet of the present invention has a thin structure, said powdery solid flame retardant can be smoothly impregnated into the inside of said fiber sheet, so that said fiber sheet will gain high flame retardancy to non-flammability.
A desirable flame retardant is a capsulated ammonium polyphosphate covered with melamine, urea, or the like, though price-wise the most desirable flame retardant is ammonium polyphosphate, which has an average degree of polymerization in the range of between 10 and 40. Said ammonium polyphosphate having said average degree of polymerization, is difficult to dissolve, or insoluble in water, and decomposes at a high temperature, to produce a gas which is flame retardant, said flame retardant gas having low toxicity to humans and animals.
Herein said average degree $n$ of polymerization of ammonium polyphosphate is calculated using the following formula 1.
[Formula 1]

$$n = \frac{2 \times P_{mol}}{N_{mol} - P_{mol}}$$

Wherein P mol shows the mole number of phosphorus contained in said ammonium polyphosphate, N mol shows the mole number of nitrogen, and the P mol and N mol are each calculated using the following formulae.
[Formula 2]

$$P_{mol} = \frac{P \text{ content (\% by mass)}/100}{\text{Atomic weight of P (30.97)}}$$

[Formula 3]

$$N_{mol} = \frac{N \text{ content (\% by mass)}/100}{\text{Atomic weight of N (14.01)}}$$

The analysis of the P content is carried out using, for example, an IPC emission spectrochemical analysis, with an analysis of the N content being carried out using, for example, a CHN measurement method.

In a case where the ammonium polyphosphate has an average degree of polymerization greater than 10, said ammonium polyphosphate is almost insoluble in water, while in a case where said ammonium polyphosphate has an average degree of polymerization beyond 40, when said ammonium polyphosphate is dispersed in water or an aqueous dispersion medium, the viscosity of the resulting dispersion increases remarkably, so that in a case where said dispersion is applied to or impregnated into said porous sheet, it will be is difficult to uniformly coat or impregnate said porous sheet with said dispersion, and as a result, it is not guaranteed to provide a porous sheet with excellent flame retardancy.

In the present invention, as said powdery solid flame retardant, an expandable graphite may be used with said ammonium polyphosphate.

The expandable graphite used in the present invention is produced by soaking a natural graphite in an inorganic acid such as concentrated sulfuric acid, nitric acid, selenic acid or the like, and then treating it with an oxidizing agent such as perchloric acid, perchlorate, permanguate, bichromate, hydrogen peroxide or the like, said expandable graphite having an expansion start temperature in the range of between about 250 and 300°C. The expansion volume of said expandable graphite is in the range of between about 30 and 300 ml/g, its particle size being in the range of between about 300 and 30 mesh.

In a case where the synthetic resin solution or emulsion is impregnated into or applied to said porous sheet, or in a case where the synthetic resin is mixed into said porous sheet, said powdery solid fire retardant such as ammonium polyphosphate, expandable graphite, or the like may be commonly mixed into said synthetic resin solution or emulsion. Any mixing ratio can be applied, but commonly 0.5 to 100% by mass of said ammonium polyphosphate, or in the case of said expandable graphite being used, 0.5 to 50% by mass of said expandable graphite is mixed in with said porous sheet.

In a case where said synthetic resin is a water solution, a water soluble resin is preferably dissolved in said water solution. Said water soluble resin may include such as sodium polyacrylate, partial saponified polyacrylate, polyvinylalcohol, carboxymethyl cellulose, methyl cellulose, ethyl cellulose, hydroxyethyl cellulose, or the like. Further, an alkali soluble resin such as a copolymer of acrylate and/or methacrylate, and an acrylic acid and/or methacrylic acid, or a slightly cross-linked copolymer of the above mentioned copolymer, or the like may be used as said water soluble resin of the present invention. Said copolymer or said slightly cross-linked copolymer is commonly provided as an emulsion.

In a case where said water soluble resin is dissolved in said synthetic resin water solution, said water solution may be thickened to improve the stability of dispersion, making it difficult for said ammonium polyphosphate and said expandable graphite sediment, thus preparing a uniform dispersion.

Further, the adhesiveness of said ammonium polyphosphate and expandable graphite to said fibers may be improved by said water soluble resin, preventing the release of said ammonium polyphosphate and expandable graphite from said fiber sheet.

Said water soluble resin may be commonly added to said water solution in an amount in the range of between 0.1 and 20% by mass as a solid.

Further, to add said powdery solid flame retardant, such as said ammonium polyphosphate, or expandable graphite to said porous sheet, a dispersion of said ammonium polyphosphate, or expandable graphite may be applied to or impregnated into said porous sheet, after said synthetic resin has been impregnated into said porous sheet, wherein said dispersion has been prepared by dispersing said ammonium polyphosphate, or expandable graphite into said synthetic resin aqueous solution of water soluble resin such as sodium polyacrylate, partially saponified polyacrylate, polyvinylalchohol, carboxymethyl cellulose, methyl cellulose, hydroxymethyl cellulose, hydroxyethyl cellulose or the like, or into a synthetic resin emulsion such as an emulsion of alkali soluble resin such as a copolymer of acrylate and/or methacrylate, and acrylic acid and/or methacrylic acid, or a slightly cross linked copolymer as described above, or the like.

To disperse said powdery solid flame retardant of said ammonium polyphosphate, expandable graphite, or the like into said synthetic resin emulsion or aqueous solution, a homomixer, a supersonic wave type emulsifying machine or the like is preferably used.

In a case where a supersonic type emulsifying machine is used, said powdery solid flame retardant of said ammonium polyphosphate, or expandable graphite, or the like is uniformly dispersed in said aqueous solution or synthetic resin emulsion. In particular, said expandable graphite is powdered by the supersonic effect, and in a case where said synthetic resin emulsion or aqueous solution into which said powdered expandable graphite has been uniformly dispersed is impregnated into a porous sheet, said expandable graphite will easily penetrate to the inside of said porous sheet, because said porous sheet has a thin structure as mentioned before, improving the flame retardancy of said porous sheet.

[Manufacture of said shock and sound absorbing member]

To manufacture said shock and sound absorbing member of the present invention, said base panel 3 is attached to one side of said core panel 2 and the other side of said core panel 2, is covered with said porous sheets 4. To combine said base panel 3 with said core panel 2, or said porous sheet 4 with said core panel 2, generally a screw or clip can be used and further an adhesive, hot melt adhesive, or ultrasonic welding, high frequency welding, or heat welding, or the like can be used.

Said shock and sound absorbing member 1 of the present invention is generally arranged so as to face said porous sheet 4 of said shock and sound absorbing member 1 toward the noise source such as the engine etc., and said base panel 3 is arranged on the opposite side of said porous sheet 4.

EXAMPLES

The present invention is concretely described by the following EXAMPLES. The scope of the present invention, however, is not limited by these EXAMPLES.

(Material samples used in EXAMPLES)

(Manufacture of the porous sheet)

(Porous sheet A)

A fiber mixture containing 50 parts by mass of a polyester fiber (fineness: 2.2dtex, fiber length: 75mm), 10 parts by mass of a hollow polyester fiber (fineness: 15dtex, fiber length: 75mm), and 40 parts by mass of a core-shell type polyester composite fiber (fineness: 4.4detex, fiber length: 55mm, melting point of the shell component: 150° C) as a fiber having a low melting point, was used.

Said fiber mixture was opened by an opening machine to be web-like, and the resulting opened web-like fiber mixture was then needle punched. The resulting needle punched web sheet was then introduced into a heating oven at 180° C to melt said low melting point fiber and adjust the thickness of said needle punched web sheet, to obtain a porous sheet A with a thickness of 5mm, and a unit weight of $1500g/m^2$. The ventilation resistance of the resulting porous sheet A was 3.8 kPa ·s/m.

(Porous sheet B)

1. Base sheet B1
A fiber mixture containing 60 parts by mass of a polyester fiber (fineness: 2.2dtex, fiber length: 75mm), 10 parts by mass of a polypropylene fiber (fineness: 1.5detex, fiber length: 55mm), and 30 parts by mass of a core-shell type polyester composite fiber (fineness: 4.4dtx, fiber length: 55mm melting point of the shell component: 150° C) as a fiber having a low melting point, was used, obtaining a base sheet B1 made of a porous sheet with a thickness of 15mm and a unit weight of $800g/m^2$ in the same manner as applied for said porous sheet A.
2. Surface sheet B2

(1) A nonwoven fabric made of a polyester fiber (made by the needle punching method, unit weight: $80g/m^2$) was used as a green sheet B2$\alpha$.
(2) A mixture solution containing 30 parts by mass of a resol type phenol-alkylresorcin-formaldehyde precondensation polymer (solid content: 50% by mass water solution), 1 part by mass of a carbon black (solid content: 30% by mass water dispersion), 2 parts by mass of a fluorine group water and oil repellent agent (solid content: 20% by mass water solution) and 67 parts by mass of water was prepared as a coating solution B2$\beta$.
(3) Said coating solution B2$\beta$ was then applied to and impregnated into said green sheet B2$\alpha$, the amount of coating being adjusted to be 30% by mass by a roll coater, following which said green sheet B2$\alpha$, which said

coating solution B2β was applied to and impregnated into, was dried at 150°C for 3 minutes, to obtain a surface sheet B2.

3. Lamination

A polyamide copolymer powder (particle size: 200 to 250μm, melting point 130°C) as a hotmelt adhesive was scattered onto the surface of said base sheet B1 in a coating amount of 5g/m². After this, said surface sheet B2 was put onto the surface of said base sheet B1, and then the surface of said surface sheet B2 was pressed by a heating roll (surface temperature: 180°C) to attach said surface sheet B2 to said base sheet B1 adjusting the thickness, to obtain a porous sheet B with a thickness of 10mm. The ventilation resistance of said porous sheet B was 2.5 kPa ·s/m.

(Porous sheet C)

1. Base sheet C1

(1) A fiber mixture containing 20 parts by mass of a polyester fiber (fineness: 4.4dtex, fiber length: 60mm), 70 parts by mass of a carbon fiber (fineness: 1.2dtex, fiber length: 70mm), and 10 parts by mass of a core-shell type polyester composite fiber as a fiber having a low melting point (fineness: 4.4dtex, fiber length: 55mm, melting point of the shell component: 150°C) was used, and a green sheet C1α with a thickness of 10mm and unit weight of 700g/m² was obtained by the same method as applied to obtain said porous sheet A.
(2) A mixture solution containing 30 parts by mass of a resol type phenol-alkyl resorcin-formaldehyde precondensation polymer (solid content 50% by mass water solution), 1 part by mass of a carbon black (solid content: 30% by mass water dispersion), 10 parts by mass of polyammonium phosphate as a flame retardant agent (particle size: 40 to 50μm, average polymerization degree: n=30), 5 parts by mass of an expandable graphite as a flame retardant agent (particle size: 100mesh, the temperature to start expansion: 280°C, the expansion volume: 200ml/g), 0.1 part by mass of a sodium polyacrylate, and 53.9 parts by mass of water was stirred by a homomixer, to prepare a uniform coating solution C1β.
(3) Said coating solution C1β was applied to and impregnated into said green sheet C1α, the amount of coating being adjusted to be 30% by mass by a roll coater, and then said green sheet C1α, which said coating solution C1β was applied to and impregnated into, was dried at 160°C for 10 minutes, to obtain a base sheet C1 made of a porous sheet.

2. Surface sheet C2

(1) A nonwoven fabric made of a polyester fiber (made by the spunbonding method, unit weight: 30g/m²) was used as a green sheet C2α.
(2) A mixture solution containing 30 parts by mass of a resol type phenol-alkyl resorcin-formaldehyde precondensation polymer (solid content: 50% by mass water solution), 1 part by mass of a carbon black (solid content: 30% by mass water dispersion), 2 parts by mass of a fluorine group water and oil repellent agent (solid content: 20% by mass water solution), and 67 parts by mass of water was prepared as a coating solution C2β.
(3) Said coating solution C2β was then applied to and impregnated into said green sheet C2α, the amount of coating being adjusted to be 20% by mass by a roll coater, following which said green sheet C2α, which said coating solution C2β was applied to and impregnated into was dried at 150°C for 2 minutes, to obtain a surface sheet C2.

3. Lamination

Said surface sheet C2 was then put onto the surface of said base sheet C1, and the resulting laminated sheet was molded by hot pressing at 150°C for 2 minutes, to obtain a porous sheet C with a thickness of 5mm.
The ventilation resistance of said porous sheet C was 1.1 kPa ·s/m.

[Porous sheet D]

1. Base sheet D1
A base sheet D1 with a thickness of 5mm and unit weight of 500g/m² was obtained in the same manner as applied to obtain said porous sheet A, with the exception that a fiber mixture containing 45 parts by mass of a polyester fiber (fineness: 4.4dtex, fiber length: 75mm), 5 parts by mass of a hollow polyester fiber (fineness: 15dtex, fiber length: 75mm), and 50 parts by mass of a core-shell type polyester composite fiber as a fiber having a low melting point (fineness: 4.4dtex, fiber length:55mm, melting point of the shell component 130°C) was used, and the temperature in the heating oven was set to be 150°C.

2. Surface sheet D2

(1) A nonwoven fabric made of a polyester fiber (made by the needle punching method, unit weight: $100g/m^2$) was used as a green sheet D2$\alpha$.

(2) A mixture solution containing 2 parts by mass of a fluorine group water and oil repellent agent (solid content: 20% by mass water solution), 20 parts by mass of an acrylic resin emulsion (solid content: 40% by mass), and 78 parts by mass of water was used as a coating solution D2$\beta$.

(3) Said coating solution D2$\beta$ was then applied to and impregnated into said green sheet D2$\alpha$, the amount of coating being adjusted to be 20% by mass by a roll coater. A mixture solution containing 20 parts by mass of a polyester copolymer (particle size: 20 to 30$\mu$m, melting point: 120°C), 0.5 parts by mass of an acrylic ester and acrylic acid copolymer resin, and 79.5 parts by mass of water was prepared, as a hot melt adhesive, and said mixture solution was then applied to one side of said green sheet by spray coating, the amount of coating being adjusted to be $15g/m^2$, following which said green sheet, to which said mixture solution was applied, was then dried at 150°C for 4 minutes, to obtain a surface sheet D2.

3. Lamination

Said surface sheet D2 was then put onto the surface of said base sheet D1 so as to contact the side of said surface sheet D2 to which said hot melt adhesive was applied, following which the resulting laminated sheet was molded by hot pressing at 150°C for 40 seconds, to obtain a porous sheet D with a thickness of 5mm.

The ventilation resistance of said porous sheet D was 0.5 kPa ·s/m.

[Porous sheet E]

A fiber mixture sheet containing 70 parts by mass of a carbon fiber (fineness: 1.2dtex, fiber length: 70mm), and 30 parts by mass of a polypropylene fiber (fineness: 1.5dtex, fiber length: 55mm) was molded by hot pressing at 180°C, to obtain a porous sheet E with a unit weight of $800g/m^2$, and a thickness of 2mm.

[Manufacture of core panel]

[Core panel A]

Using a thermoplastic resin sheet made of a mixture of polypropylene/polyethylene/talc=70/10/20 weight ratio and having a thickness of 0.5mm, a core panel A having a shape as shown in Fig.2 was manufactured by the common vacuum forming method.

Before said vacuum forming, said thermoplastic resin sheet was not stretched widthwise.

The size of said core panel A was 40mm long, 40mm wide, and 15mm in height.

The number of tubular cells was 484 cells/$m^2$. The bottom of each cell was cut out so as to be a bottomless tubular rectangular cell.

[Core panel B]

Using a thermoplastic resin sheet made of a polymer alloy of an engineering plastic consisting of styrene modified polyphenylene ether/polyamide/styrene-hydrogenated polyolefin-styrene block copolymer with a 55/40/5 weight ratio and having a thickness of 0.3mm, a core panel B having a shape as shown in Fig.2 was manufactured by the common vacuum and pressure forming method.

Before said vacuum and pressure forming, said thermoplastic resin sheet was stretched widthwise. The degree of stretching was 10% of the original width.

The size of said core panel B was 40mm long, 40mm wide, and 855mm in height.

The number of tubular cells was 484 cells/$m^2$.

The bottom of each cell was cut out so as to be a tubular rectangular cell.

[Core panel C]

Using a three layer laminated sheet having a thickness of 1.2mm as a thermoplastic resin sheet, wherein polypropylene layers having a thickness of 0.05mm were attached to the both sides of a propylene-ethylene copolymer layer to which talc was added in an amount of 30% by mass, the thickness of said propylene-ethylene copolymer layer being 1.1mm, a core panel C having a shape as shown in Fig.2 was manufactured by the common vacuum forming method. Before said vacuum forming, said thermoplastic resin sheet was not stretched widthwise.
The size of said core panel C was 20mm long, 20mm wide, and 10mm in height.
The number of said tubular cells was 1089 cells/m$^2$. The bottom of each tubular cell was not cut out so as to be a bottomed tubular rectangular cell.

[Core panel D]

Using a thermoplastic resin sheet having a thickness of 0.6mm made of a polypropylene to which 15% by mass of a polyammonium phosphate as a fire retardant agent and 10% by mass of talc, were added, a core panel D was manufactured by the common vacuum forming method.
Before said vacuum forming, said thermoplastic sheet was not stretched widthwise.
The size of said core panel D was 150mm in diameter and 10mm in height.
The number of tubular cells was 25 cells/m$^2$.
The bottom of each tubular cell was cut out so as to be a bottomless tubular cell.

[Manufacture of the shock and sound absorbing member]

[Shock and sound absorbing member A]

A base panel made of an iron panel having a thickness of 0.2mm, said porous sheet A, and said core panel A were each molded into a prescribed shape, and then said core panel A was put onto said base panel, and further, said porous sheet A was put onto said core panel A, and these were clipped together, to obtain a shock and sound absorbing member A.

[Shock and sound absorbing member B]

A base panel consisting of an article molded by the injection molding of polypropylene, was prepared, said base panel having a thickness of 2mm. Said porous sheet B and said core panel B were each molded into a prescribed shape, and said core panel B was then put onto said base panel, then said porous sheet B was put onto said core panel B, and these were clipped together, to obtain a shock and sound absorbing member B.

[Shock and sound absorbing member C]

A base panel consisting of an article molded by the injection molding of polypropylene was prepared, said base panel having a thickness of 3mm. Said porous sheet C and said core panel D were each molded into a prescribed shape, and said core panel D was put onto said base panel, and further, said porous sheet C was put onto said core panel D, and these were clipped together, to obtain a shock and sound absorbing member C.

[Shock and sound absorbing member D]

Said porous sheet D and said core panel C were each molded into a prescribed shape, and the bottoms of the tubular cells were set to be the base panel, and said porous sheet D was then put onto said core panel C, and these were clipped together to obtain a shock and sound absorbing member D.

[Shock and sound absorbing member E]

Said porous sheet E was prepared as a base panel. Said porous sheet B and said core panel C were each molded into a prescribed shape, and said core panel C was then put onto said base panel, and further, said porous sheet B was put onto said core panel C, and these were clipped together, to obtain a shock and sound absorbing member E.

[Material samples used in COMPARISONS]

[Manufacture of the porous sheet]

[Porous sheet F]

A porous sheet F was obtained from said porous sheet A, with the exception that its thickness was set to be 2mm, and its unit weight was set to be 200g/m$^2$.
The ventilation resistance of said porous sheet F was 0.05 kPa ·s/m.

[Porous sheet G]

A porous sheet G was obtained by lapping a pair of said porous sheets F together with a polypropylene film (thickness: 40$\mu$m) placed between them, and the resulting laminated sheet was hot pressed at 180°C, to obtain a porous sheet G having a thickness of 2mm. The ventilation resistance of said porous sheet G was 6.5 kPa ·s/m.

[Manufacture of the shock and sound absorbing member]

[Shock and sound absorbing member F]

In said shock and sound absorbing member A, said porous sheet F was used instead of said porous sheet A, to obtain a shock and sound absorbing member F.

[Shock and sound absorbing member G]

In said shock and sound absorbing member A, said porous sheet G was used instead of said porous sheet A, to obtain a shock and sound absorbing member G.

[Performance test]

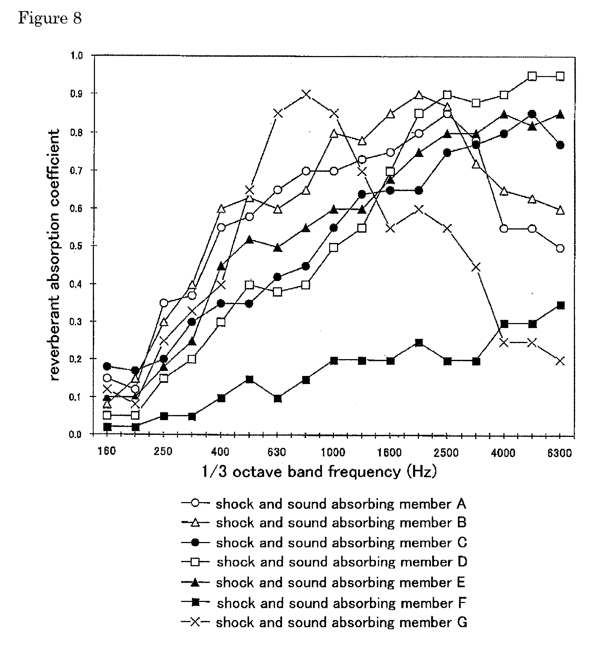

The performance test was conducted on 5 samples, said shock and sound absorbing member A to said shock and sound absorbing member E in EXAMPLES and 2 samples, said shock and sound absorbing member F and said shock and sound absorbing member G, to evaluate performance.
The performance test was conducted in a reverberation room. Each sample's degree of sound and absorption was measured according to JIS A 1409. When the measurements were taken, the base panel side of each shock and sound absorbing member was placed at the lowermost part of each of said shock and sound absorbing member.
The test results are shown by the graphs in Fig.8. Referring to the graphs in Fig.8, each of said shock and sound absorbing members A to E, has excellent sound absorbing and insulating properties.
Shock and sound absorbing member A had an excellent sound absorbing property for sound in the mid-frequency band (600 to 2500H$_2$).
Shock and sound absorbing member B had an excellent sound absorbing property for sound in the mid-frequency band (600 to 2500H$_2$). Further, said shock and sound absorbing member B had an excellent heat resistance and although each tubular cell was tall as high as 855mm, as a result of the thermoplastic resin sheet having been stretched widthwise before vacuum and pressure forming, the molded article (core panel B) had a nearly uniform thickness, and was without unevenness as a whole.
Shock and sound absorbing member C had an excellent sound absorbing property for sound in the mid-frequency band (600 to 2500H$_2$) to the high frequency band (3000 to 6000H$_2$), and further had excellent flame retardancy.
Shock and sound absorbing member D had an excellent sound absorbing property for sound particularly in the high frequency band (3000 to 6000H$_2$), and had an advantage of light weight.
Shock and sound absorbing member E had an excellent sound absorbing property for sound in the mid-frequency band (600 to 2500H$_2$) to the high frequency band (3000 to 6000H$_2$) and good flame retardancy. Further, as well as good sound absorption, the rectification effect of the base material was excellent.
Shock and sound absorbing member F as COMPARISON had a sound absorbing property, but only for sound in a partial, particular mid-frequency band (600 to 2500H$_2$).
Shock and sound absorbing member G as COMPARISON had a low sound absorbing property for any frequency band.

POSSIBILITY OF INDUSTRIAL USE

Said shock and sound absorbing member of the present invention has very excellent sound insulating and absorbing properties, and is useful as a engine under cover or upper cover, or the like.

**Claims**

1.  A shock and sound absorbing member comprising a core panel onto which a plural number of tubular cells are formed lengthwise and widthwise, a base panel being attached to one side of said core panel, and a porous sheet covering the other side of said core panel, wherein said core panel is made of a thermoplastic resin, the ventilation resistance of said porous sheet being set to be in the range of between 0.5 and 5.0 kPa ·s/m.

2.  A shock and sound absorbing member in accordance with claim 1, wherein said thermoplastic resin core panel is manufactured by the vacuum and/or pressure forming of a thermoplastic resin sheet.

3.  A shock and sound absorbing member in accordance with claim 2, wherein said thermoplastic resin sheet is drawn widthwise to a prescribed degree before said thermoplastic resin sheet is molded by vacuum and/or pressure forming.

Figure 1

Figure 2

Figure 3

Figure 4

Figure 5

Figure 6

Figure 7

Figure 8

shock and sound absorbing member A
shock and sound absorbing member B
shock and sound absorbing member C
shock and sound absorbing member D
shock and sound absorbing member E
shock and sound absorbing member F
shock and sound absorbing member G

## INTERNATIONAL SEARCH REPORT

| | International application No. |
|---|---|
| | PCT/JP2007/068239 |

A.  CLASSIFICATION OF SUBJECT MATTER
*B60R13/08*(2006.01)i, *B32B3/12*(2006.01)i, *B32B5/18*(2006.01)i, *G10K11/162*
(2006.01)i, *G10K11/172*(2006.01)i

According to International Patent Classification (IPC) or to both national classification and IPC

B.  FIELDS SEARCHED

Minimum documentation searched (classification system followed by classification symbols)
B60R13/08, B32B3/12, B32B5/18, G10K11/162, G10K11/172, B29C51/10

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 10-245907 A  (Meiwa Industry Co., Ltd.), 14 September, 1998 (14.09.98), Par. Nos. [0017], [0018]; Figs. 1, 2 (Family: none) | 1-3 |
| Y | JP 2002-529298 A  (Rieter Automotive (International) AG.), 10 September, 2002 (10.09.02), Par. No. [0011] & WO 2000/027671 A1    & EP 1128988 B1 | 1-3 |
| Y | JP 55-46930 A  (Shin-Kobe Electric Machinery Co., Ltd.), 02 April, 1980 (02.04.80), Page 1, lower right column, line 12 to page 2, upper left column, line 6 (Family: none) | 2,3 |

[X]  Further documents are listed in the continuation of Box C.          [ ]  See patent family annex.

| | |
|---|---|
| *    Special categories of cited documents: "A"  document defining the general state of the art which is not considered   to be of particular relevance "E"  earlier application or patent but published on or after the international filing date "L"  document which may throw doubts on priority claim(s) or which is cited to establish the publication date of another citation or other special reason (as specified) "O"  document referring to an oral disclosure, use, exhibition or other means "P"  document published prior to the international filing date but later than the priority date claimed | "T"  later document published after the international filing date or priority date and not in conflict with the application but cited to understand the principle or theory underlying the invention "X"  document of particular relevance; the claimed invention cannot be considered novel or cannot be considered to involve an inventive step when the document is taken alone "Y"  document of particular relevance; the claimed invention cannot be considered to involve an inventive step when the document is combined with one or more other such documents, such combination being obvious to a person skilled in the art "&"  document member of the same patent family |

| Date of the actual completion of the international search 11 December, 2007 (11.12.07) | Date of mailing of the international search report 18 December, 2007 (18.12.07) |
|---|---|
| Name and mailing address of the ISA/ Japanese Patent Office | Authorized officer |
| Facsimile No. | Telephone No. |

Form PCT/ISA/210 (second sheet) (April 2007)

<div align="center">

**INTERNATIONAL SEARCH REPORT**

</div>

| International application No. |
|---|
| PCT/JP2007/068239 |

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 137014/1976 (Laid-open No. 55108/1978) (Mitsui Petrochemical Industries, Ltd.), 11 May, 1978 (11.05.78), Fig. 5 (Family: none) | 1-3 |
| A | WO 2003/080326 A1 (Ube-Nitto Kasei Co., Ltd.), 02 October, 2003 (02.10.03), Fig. 2 & US 2005/126852 A1 & EP 1491327 A1 | 1-3 |
| A | JP 61-32737 A (Idemitsu Petrochemical Co., Ltd.), 15 February, 1986 (15.02.86), Full text & US 4680157 A & EP 176177 A2 | 2,3 |
| A | Microfilm of the specification and drawings annexed to the request of Japanese Utility Model Application No. 28128/1978 (Laid-open No. 133181/1979) (Meiwa Industry Co., Ltd.), 14 September, 1979 (14.09.79), Fig. 1 (Family: none) | 1,2 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP TOKKAI2002086490 B
- JP TOKKAIH11254570 B